# EUROPEAN PATENT SPECIFICATION

(11) **EP 1 778 762 B1**
(45) Date of publication and mention of the grant of the patent: **19.12.2007**
(21) Application number: 05772523.6
(22) Date of filing: 09.08.2005
(51) Int. Cl.: C08G 65/44, C08L 71/12

(54) **PROTON CONDUCTING COPOLYMERS**
PROTONENLEITENDE COPOLYMERE
COPOLYMÈRES CONDUCTEURS DE PROTONS

(30) Priority: 09.08.2004 EP 04077266
(43) Date of publication of application: 02.05.2007
(73) Proprietor: Stichting Energieonderzoek Centrum Nederland, 1755 LE Petten (NL)
(72) Inventor: IONESCU, Lucia, Daniela, NL-1824 GZ Alkmaar (NL); WAKKER, Andre, NL-2061 EN Bloemendaal (NL)
(74) Representative: Swinkels, Bart Willem
(86) International application number: PCT/NL2005/000578
(87) International publication number: WO 2006/016805

(56) References cited:
- US-A- 5 159 018
- US-A1- 2003 225 220
- US-B2- 6 576 800

## Description

### Field of the invention

The present invention relates to copolymers prepared from 2,5- and/or 2,6-disubstituted phenol derivatives, a process for preparing such a copolymer by oxidation coupling polymerization, proton conducting copolymers prepared from the copolymers, a process for preparing the proton conducting copolymers and membranes and fuel cells comprising the proton conducting copolymers.

### Background of the invention

PEM ("PEM" means Polymer Electrolyte Membrane or Proton Exchange Membrane) fuel cells such as are known from US 5.928.807 are equipped with semipermeable membranes, which separate an anode compartment and a cathode compartment of the fuel cell from one another, but are designed to enable the transport of protons from the anode to the cathode.

The state of the art PEM fuel cell technology is not good enough to approach cost and functionality targets, in particular for the fuel cell industry's biggest potential market, i.e. the transport sector. The currently most used membranes that are based on Nafion® perfluorosulfonic acid ionomers having the general structure (Butler, G.B.; O'Driscoll, K.F.; Wilkes, G.L. JMS-Rev. Macromol. Chem. Phys. 1994, C34(3), 325 - 373):

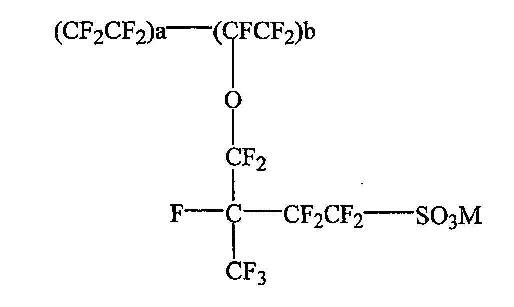

Although Nafion® is primarily used as an ion exchange membrane in the chlorine-alkali industry, it has boosted automotive FC ("FC" means Fuel Cell) applications because of low temperature operation and cold start capability. Also, the membrane is forgiving for intensive temperature cycling.

However, the main problem with the Nafion® membrane is that it needs 100% water saturation (i.e. a 100% RH environment) to achieve for the PEM fuel cell the required (high) proton conductivity. In fact, water ***is*** the proton conducting phase in the Nafion® membrane. This holds for alternative, sulfonated ionomers (S-PEEK, S-PES) as well. Not only does the humidification of PEM fuel cells operating at about 70° - 80°C add to system cost and complexity, but it also makes operation above 100°C virtually impossible due to the water loss from the Nafion® membrane. Proton conductivity at these higher temperatures is a prerequisite for better performance of PEM fuel cells. In particular, the (rather low) cooling efficiency of the FC engine increases with increasing FC temperature, and the CO tolerance of the PEM FC even increases dramatically with increasing operating temperature. The latter is particularly relevant when (on-board) reformate is the fuel. Typical target temperatures, also depending on the cooling concept, are in the range of about 120°C up to about 150°C.

So-called hybrid Nafion® membranes are a technology option that has been investigated some years now, so far without much success. Such membranes are in fact Nafion® membranes filled with materials that (further) increase the water retention of Nafion. The hope is to obtain a membrane that has the required proton conductivity in the relevant temperature range and at the same time at RH levels as low as 40% to 20%, or even lower.

US 5.525.436 and US 5.716.727 disclose PBI ("PBI" means polyimidazole) and similar polymers as proton conductive polymers that can be used for the manufacture of membranes for fuel cells. Whilst PBI membranes doped with phosphoric acid are another, and promising, technology option, and do indeed operate without any humidification and typically at temperatures of 150°C or higher, it is in fact a quasi-PAFC ("PAFC" means Phosphoric Acid Fuel Cell), with similar draw-backs: large cathode losses, limited thermal cyclability and life issues related to the leaching of the acid. PBI based MEA's are currently being co-developed by Celanese and Honda, and are restrict on the market.

The object of the present invention is to overcome the drawbacks indicated above. In particular, the present invention provides a new class of proton conducting copolymers that can be used for high temperature PEM fuel cell applications.

### Summary of the invention

The present invention relates to a proton conducting copolymer according to formula (I): 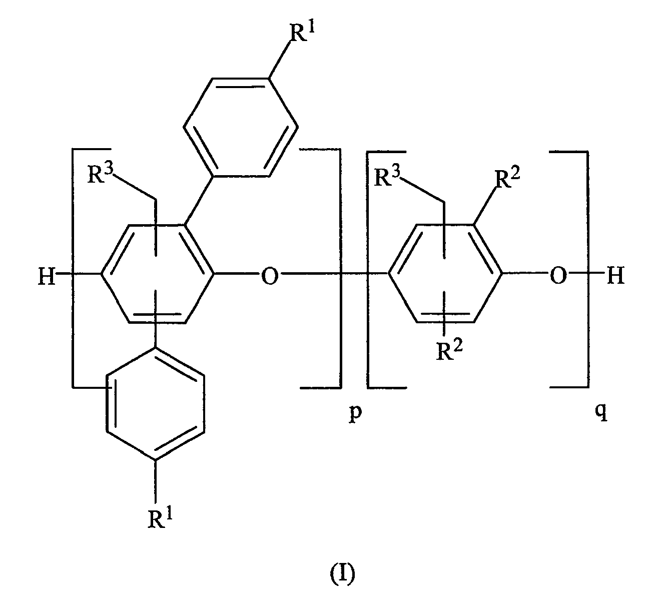 wherein:
the copolymer comprises 2,5- and/or 2,6-di(p-R¹-aryl)phenol moieties and 2,5- and/or 2,6-di-R²-phenol moieties;
R¹ is hydrogen or a C₁ - C₁₀ alkyl group;
R² is a C₁ - C₁₀ alkyl group;
R³ is chloro, bromo or a heterocyclic group selected from 1-pyrazolyl, 1-benzopyrazolyl, 1-imidazolyl, 1-benzoimidazolyl, 2,3-triazol-1-yl, 2,4-triazol-1-yl, 1,6-dihydropyridazin-1-yl, 1,2-dihydropyrimidin-1-yl, 1,2-dihydro-1,3-benzodiazin-1-yl, 1,2-dihydropyrazin-1-yl, 1,2-dihydro-1,4-benzodiazin-1-yl, 1,2-dihydro-1,3,5-triazin-1-yl and 3,4-dihydro-1,2,4-triazinyl, provided that within the copolymer at least one R⁵ is a heterocyclic group;
p is in the range of 100 to 100.000; and
q is in the range of 100 to 100.000.

The present invention further relates to a process for the preparation of a proton conducting polymer according to formula (I), a membrane comprising a proton conducting copolymer according to formula (I) and a fuel cell comprising said membrane.

The invention further comprises copolymers according to formula (II): 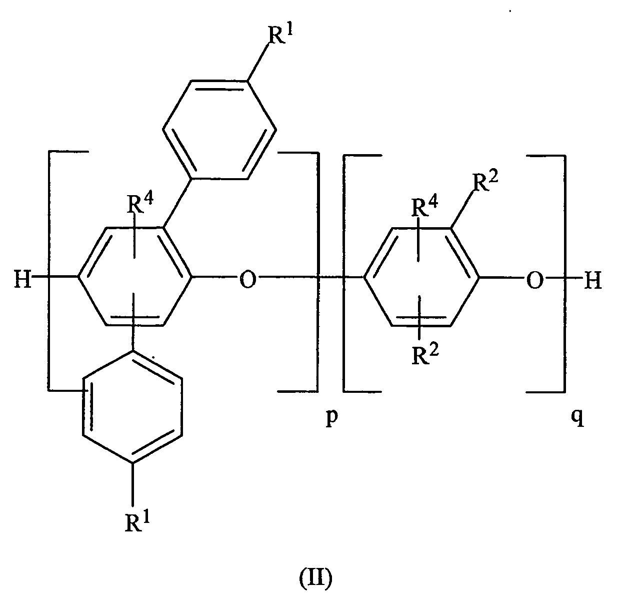 wherein R¹ is hydrogen or a C₁- C₁₀ alkyl group;
R² is a C₁ - C₁₀ alkyl group;
R⁴ is hydrogen or a -CH₂X group wherein X is chloro or bromo, provided that within the copolymer at least one R⁴ is a -CH₂X group;
p is in the range of 100 to 100.000; and
q is in the range of 100 to 100.000.

The present invention finally relates to a process for the preparation of the copolymers according to formula (II) and the use thereof for the preparation of proton conducting copolymers.

### Detailed description of the invention

### Copolymer

The starting materials used for the preparation of the proton conductive polymers are copolymers, preferably block copolymers, from substituted phenol derivatives which can be polymerised by the well known oxidative coupling polymerisation. Random copolymers of such phenol derivatives are for example disclosed in US 3.257.357, US 3.733.307 and US 4.207.406. US 5.037.943 discloses a process for the manganese polymerisation of 2,6-disubstituted phenol compounds which may be copolymerised with 2,3,6-trimethylphenol. The disclosure of US 5.159.018 encompasses a broad class of random copolymers prepared from phenol compounds having substituents R₁ - R₅, wherein R₁ - R₅ are independently selected from hydrogen, halogen, substituted or unsubstituted hydrocarbon residues containing 1-18 carbon atoms, substituted or unsubstituted aryl groups such as phenyl groups, benzyl groups or allyl groups. However, US 5.159.018 does not disclose explicitly the preferred copolymers according to the present invention. Additionally, US 6.576.800 discloses in Table 2 random copolymers of phenol monomers that are substituted at position 2 by long chain alkyl groups whereas US 2003/0225220 discloses the synthesis of random copolymers of three different phenol monomers. The US patents and patent applications mentioned here are all incorporated by reference for the US patent practice.

According to the present invention, the copolymers according to formula (II) may be random copolymers, tapered copolymers or block copolymers. However, it is preferred that the copolymers are block copolymers, and that they preferably comprise 2,6-di(p-R¹-aryl)phenol moieties, wherein the aryl group comprises 6 - 12 carbon atoms and wherein the aryl group may be unsubstituted or substituted with independently one or more C₁-C₆ alkyl groups or halogen atoms. The alkyl groups may me linear, branched or cyclic. Suitable alkyl groups include methyl, ethyl, n- and i-propyl, n-, s- and t-butyl, pentyl, hexyl, cyclohexyl and the like. The halogen atoms may be chlorine of bromine atoms. Most preferably, the aryl group is phenyl which implies that R¹ is most preferably hydrogen and that the aryl groups are unsubstituted.

It is furthermore preferred that the copolymers, preferably block copolymers, comprise 2,6-di-R²-phenol moieties. In the copolymers according to the invention, R² is independently selected from C₁-C₁₀ alkyl groups, wherein the alkyl groups may me linear, branched or cyclic. Suitable alkyl groups include methyl, ethyl, n- and i-propyl, n-, s- and t-butyl, pentyl, hexyl cyclohexyl and the like. Preferably, R² is selected from C₁-C₆ alkyl and most preferably R² is methyl.

Hence, according to a more preferred embodiment of the present invention, the copolymer is a block copolymer comprising a first block of 2,6-di(p-R¹-aryl)phenol moieties and a second block of 2,6-di-R²-phenol moieties. Even more preferred is that the copolymer according to the present invention is a diblock copolymer comprising a first block of 2,6-di(p-R¹-aryl)phenol and a second block of 2,6-di-R²-phenol moieties. Most preferably, the copolymer according to the present invention is a diblock copolymer consisting of a first block of 2,6-di(p-R¹-aryl)phenol moieties and a second block of 2,6-di-R²-phenol moieties.

The number average molecular weight of the copolymers according to the invention as determined by GPC is preferably within the range of 1000 to 1.000.000.

In formulae (I) and (II) p and q are within the range of 100 to 100.000. A more preferred range is 1000 - 50.000 and an even more preferred range is 2000 - 25.000.

According to the invention, it is preferred that the ratios of p and q are between 5:1 to 1:5, more preferably 2:1 to 1:2 and most preferably 1.5:1 to 1:1.5.

The copolymers according to the present invention are prepared by simultaneous or subsequent polymerisation of a 2,5- and/or 2,6-di(p-R¹-aryl)phenol derivative and a 2,5- and/or 2,6-di-R²-phenol derivative under oxidative coupling polymerisation conditions.

Since the preferred copolymers are block copolymers, the block copolymers according to the present invention are preferably prepared by a sequential oxidation coupling polymerisation, wherein the process comprises the following steps:
(a) polymerising a 2,5- and/or 2,6-di(p-R¹-aryl)phenol derivative under oxidative coupling polymerisation conditions; and
(b) polymerising a 2,5- and/or 2,6-di-R²-phenol derivative under oxidative coupling polymerisation conditions to obtain a block copolymer comprising a first block comprising 2,5- and/or 2,6-di(p-R¹-aryl)phenol moieties and a second block comprising 2,5- and/or 2,6-di-R²-phenol moieties.

Preferably, the polymerisation is carried out with oxygen and CuBr as the catalyst in the presence of tetramethylene ethylene diamine (TMEDA). The polymerisation is preferably conducted at a temperature in the range of 40° to 100°, more preferably at a temperature in the range of 50° to 70°C. Additionally, the each step of the polymerisation is preferably performed for a period of 1 to 10 h, preferably 3 to 8 h.

### Halomethylation

The halomethylation of aryl compounds is an electrophilic aromatic substitution reaction well known in the art and can for example be performed with formaldehyde, HCl and ZnCl₂ (Fuson, R.C.; McKeever, C.H.; Org. React. 1942, 1, 63; Olah, G.A.; Yu, S.H.; J. Am. Chem. Soc. 1975, 97, 2293). According to the present invention, this reaction is preferably a chloromethylation reaction. The chlorine content of the chloromethylated copolymer, preferably chloromethylated block copolymer, is preferably within the range of about 15 to about 30 %wt, based on the total weight of the copolymer. The halomethylation is preferably conducted at a temperature in the range of 25°C to 75°C during a period of about 1 to 10 h, preferably 2 to 8 h.

Since this reaction is an electrophilic aromatic substation, reaction mainly occurs at the phenol rings as was established by NMR spectroscopy. So the structure of the most preferred embodiment of the invention is: 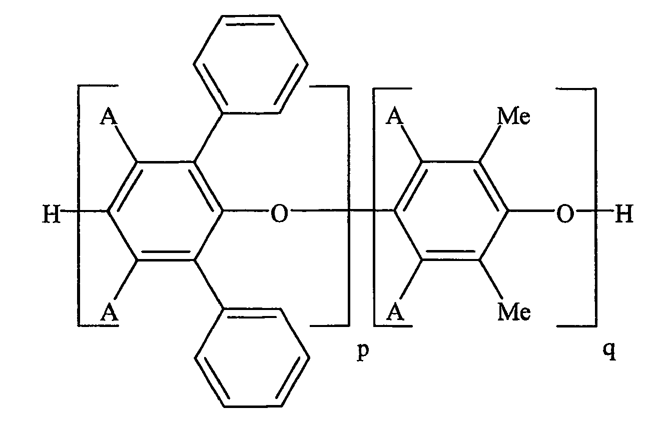 wherein A is -CH₂Cl. However, side products formed in minor quantities may comprise products wherein the phenyl substituents of the phenol rings are substituted and such products are also within the scope of the invention.

### Reaction of halomethylated copolymer with heterocyclic compound

The halomethylated, preferably chloromethylated, copolymer is reacted with a heterocyclic compound comprising at least a basic nitrogen atom, i.e. a NH moiety, to allow alkylation of the heterocyclic moiety by the halomethylene group, preferably chloromethylene group. The heterocyclic moiety is selected from the group consisting of pyrazole, benzopyrazole, imidazole, benzoimidazole, 1,2,3-triazole, 1,2,4-triazole, 1,6-dihydropyridazine, 1,2-dihydropyrimidine, 1,2-dihydro-1,3-benzodiazine, 1,2-dihydropyrazine, 1,2-dihydro-1,4-benzodiazine, 1,2-dihydro-1,3,5-triazine and 3,4-dihydro-1,2,4-triazine. According to the invention, the heterocyclic group is preferably imidazole, benzimidazole.or a mixture thereof

This reaction is preferably performed at a temperature in the range of -20° to 20°C, more preferably in the range of -10°C to 10°C, for about 1 to about 10 h, more preferably for about 2 to about 8 h.

### Proton conducting copolymer

The proton conducting copolymer according to the invention has the formula (I) as shown above and may be a random copolymer, a tapered copolymer or a block copolymer. However, it is preferred that the proton conducting copolymer is a block copolymer as disclosed above. According to the present invention, the proton conducting copolymers preferably comprises 2,6-di(p-R¹-aryl)phenol moieties, wherein the aryl group comprises 6 - 12 carbon atoms and wherein the aryl group may be unsubstituted or substituted with independently one or more C₁-C₆ alkyl groups or halogen atoms. Most preferably, the aryl group is phenyl.

In the proton conducting copolymers according to the invention R² is independently selected from C₁-C₁₀ alkyl groups, wherein the alkyl groups may me linear, branched or cyclic. Preferably, R² is selected from C₁-C₆ alkyl and most preferably R² is methyl.

When R³ is a heterocyclic group, it is preferred that R³ is 1-imidazolyl or 1-benzoimidazolyl.

The number average molecular weight of proton conducting copolymers according to the invention as determined by GPC is preferably within the range of 1000 to 1.000.000.

In formula (I) p and q are within the range of 100 to 100.000. A more preferred range is 1000 - 50.000 and an even more preferred range is 2000 - 25.000.

According to the invention, it is preferred that the ratios of p and q are between 5:1 to 1:5, more preferably 2:1 to 1:2 and most preferably 1.5:1 to 1:1.5.

It is preferred that at least 40% of the R¹ groups is a heterocyclic group, more preferably at least 50% and most preferably at least 75%.

For conductivity measurements, the proton conducting copolymers according to the invention are doped with a strong acid, preferably sulphuric acid, phosphoric acid or polyphosphoric acid, more preferably phosphoric acid or polyphosphoric acid.

The proton conducting copolymers according to this invention and in particular the proton conducting block copolymers are very suitable for use in high temperature PEM fuel cell applications. The invention therefore also relates to a membrane comprising the proton conducting copolymer according to the present invention. More in particular, the invention therefore relates to a reinforced membrane comprising the proton conducting copolymer as proton conducting phase. The invention also relates to fuel cells comprising the membrane, in particular the reinforced membrane. The invention further relates to fuel cell electrodes comprising the proton conducting copolymers.

### Example 1

In this Example, the synthesis of a block polymer from 2,6-diphenyl phenol and 2,6-dimethyl phenol having a Mₙ of about 20000 (each block has a Mₙ of about 10000) is disclosed.

In a three neck round bottomed flask are introduced 6 mg of CuBr, 8 mg TMEDA and 2 g solvent (chlorobenzene) under stirring and a 5 ml/min. oxygen flow. The mass reaction was kept for 20 - 30 minutes at 60°C under reflux and oxygen flow. Then 2 g 2,6 -diphenyl phenol were dissolved in 4 g chlorobenzene and the solution resulted was very slowly added to the three neck bottomed flask. The same oxygen flow was used further and the reaction was carried out for 5 hours. The reaction was continued by adding the appropriate amount of the second monomer 2,6 -dimethyl phenol and the reaction time is 3 hours in this second step. The final polymer was purified by repeated dissolution in chloroform and precipitation in methanol until a slightly yellowish product was obtained. The product was characterized by GC, GPC, FTIR, NMR, TGA, DSC. In this way copolymers were obtained wherein the ratio of p to q was 1:1.5 and wherein the copolymers has a Mₙ in the range of 20.000 to 75.000.

### Example 2

In this example a typical procedure of the chloromethylation of the block copolymer is disclosed.

An amount of 2 g of the block polymer having a Mₙ of 20.000 as obtained in Example 1 is dissolved for 1 h at 35°C in 5 g methylal (dimethoxy methane or CH2(MeO)₂) in a reflux flask. After cooling to room temperature, 6 g thionyl chloride and 1 g ZnCl₂ were gradually introduced into the reaction medium under stirring and cooling. The temperature was then brought up to 45°C and the reaction was carried out for 6 hours. At the end of the reaction, the reaction mass was cooled and water was gradually introduced in order to decompose the reactants that were still present in the reaction mass. The chloromethylated copolymer had a chlorine content of 18.4 % as determined with an ion chromatograph after burning a sample in a boom and by a coulometric titration after burning the sample at 1200°C. The chloromethylation can also be performed by using SnCl₄ instead of ZnCl₂.

### Example 3

In this example a typical procedure of the reaction of chloromethylated block copolymers with imidazole is disclosed.

After the chlomethylated block polymer as obtained in Example 2 was dried, it was used in a reaction with imidazole as follows: 1.25 g imidazole (corresponding to a 100% functionalisation) was dissolved in THF and introduced in a three neck round bottomed flask. The temperature of the flask was brought with the aid of ice to 0°C and the content of the flask was kept under nitrogen for about 20 minutes. Then a solution of 2 g chloromethylated block copolymer in 5 g THF was slowly added drop wise into the flask while monitoring the temperature, which should not pass 5°C. Normally a rather strong exothermic effect is observed during the addition of the block copolymer solution and after the polymer addition was completed, the reaction was continued for 2 h. Then the mass reaction is filtrated and the polymer recovered after solvent evaporation. The structure of the final product was investigated by NMR and FTIR. Thermal behaviour was also investigated by TGA and DSC. Corresponding polymers having 100%, 75%, 50%, 25%, 0% % imidazole functionalisation were obtained following the same procedure.

### Example 4

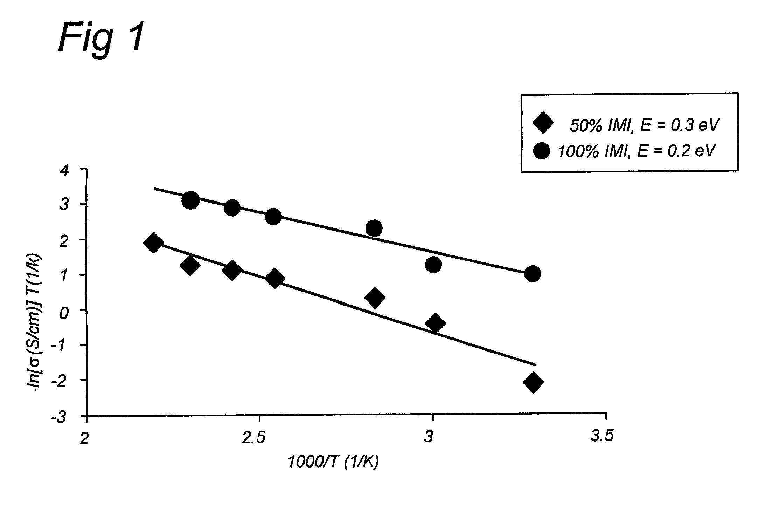

The proton conductive block coolymers obtained in Example 3 were mixed in a THF solution with polyphosphoric acid (PPA) (proton source in this model systems). Subsequently, the solvent was evaporated and the solid material remained was hot-pressed at 105°C in the form of a tablet having a diameter of 12 mm and a thickness of between about 0.16 to about 0.20 cm. The tablets were kept for 3 days in the oven at a temperature of about 80° to 90°C. The conductivity of the tablets was determined by using a homemade set up which was connected with an impedance spectroscopy device. The tablet was placed between 2 gold electrodes which were part of the setup which after fixing the tablet was closed and placed in an oven and then connected to the EIS device. EIS measurements from room temperature to about 180°C were done in a dry atmosphere and proton conductivities of 0.05 S/cm at 180°C were found. Cycles in the this temperature range were performed and the results were reversible and reproducible with an Arrhenius temperature dependence which is characteristic for intrinsic proton conductivity (cf. Figure 1): 50% IMI: y = -3.2572 * x + 9.0741, R² = 0.94; 100% IMI: y = -2.2765 * x + 8.3998, R² = 0.95. The activation energy of the proton conduction process was the lowest for the highest imidazole content and the highest for 0% imidazole in the proton conducting block copolymer.

### Results of EIS measurements:

Imidazole functionalised polymer, with different imidazole contents, mixed with poly phosphoric acid (PPA) as proton source, having a ratio imidazole/PPA per cm³ tablet = 1.83 and a volume fraction ratio polymer/PPA = 8.8. Measurements of conductivity have been done using Impedance Spectroscopy in a fully dry atmosphere (**RH = 0%**)

| Temp. (°C) | σ_{100% imi} (S/cm) | σ_{75% imi} (S/cm) | σ_{50% imi} (S/cm) | σ_{25% imi} (S/cm) | σ_{0% imi} (S/cm) |
|---|---|---|---|---|---|
| 30 | 7.9 x 10⁻³ | 1.6 x 10⁻³ | 1.2 x 10⁻⁴ | 8.0 x 10⁻⁶ | 1.0 x 10⁻⁷ |
| 60 | 9.5 x 10⁻³ | 4.3 x 10⁻³ | 2.3 x 10⁻⁴ | 3.0 x 10⁻⁵ | 2.0 x 10⁻⁶ |
| 80 | 1.0 x 10⁻² | 5.5 x 10⁻³ | 9.0 x 10⁻⁴ | 3.3 x 10⁻⁵ | 4.0 x 10⁻⁶ |
| 120 | 2.5 x 10⁻² | 1.0 x 10⁻² | 1.4 x 10⁻³ | 5.0 x 10⁻⁵ | 5.3 x 10⁻⁶ |
| 140 | 3.3 x 10⁻² | 1.2 x 10⁻² | 1.8 x 10⁻³ | 6.0 x 10⁻⁵ | 6.6 x 10⁻⁶ |
| 160 | 4.1 x 10⁻² | 1.4 x 10⁻² | 2.2 x 10⁻³ | 7.0 x 10⁻⁵ | 8.2 x 10⁻⁶ |
| 180 | 5.0 x 10⁻² | 2.0 x 10⁻² | 2.5 x 10⁻³ | 9.0 x 10⁻⁵ | 1.0 x 10⁻⁵ |

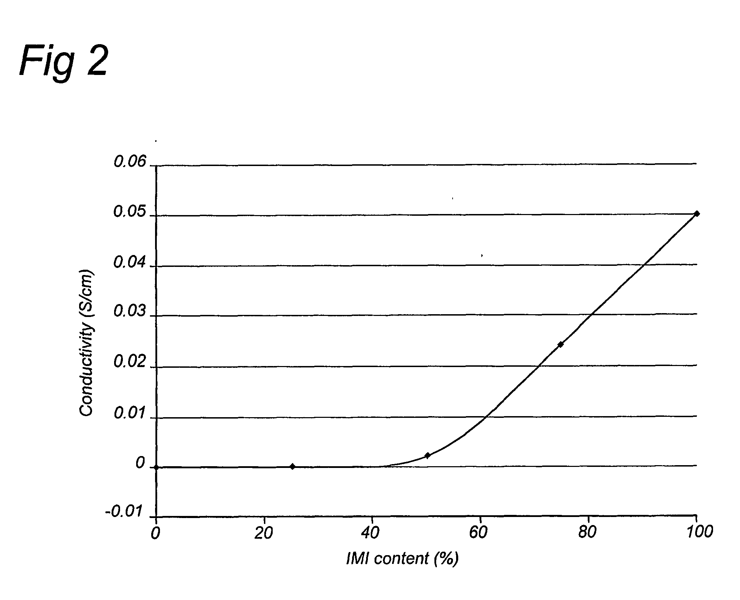

In Figure 2 the dependence of the conductivity upon imidazole content at 180°C is shown.

## Claims

1. Proton conducting copolymer according to formula (I): 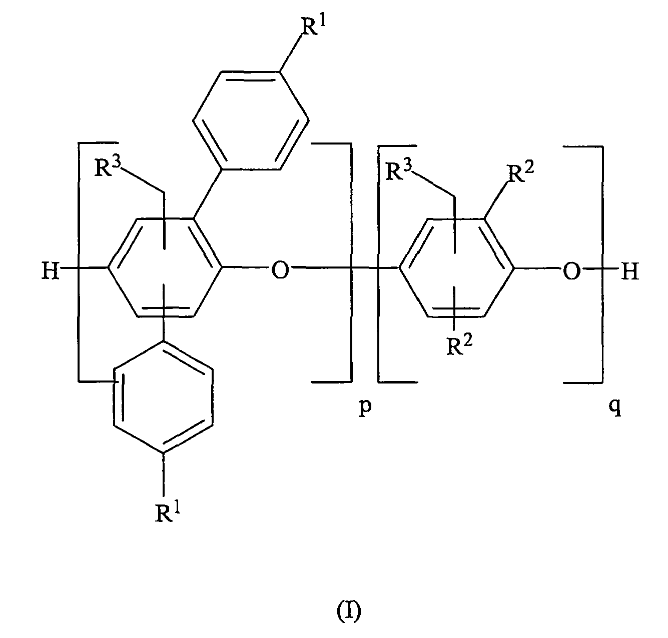 wherein:
the copolymer comprises 2,5- and/or 2,6-di(p-R¹-aryl)phenol moieties and 2,5-and/or 2,6-di-R²-phenol moieties;
R¹ is hydrogen or a C₁- C₁₀ alkyl group;
R² is a C₁-C₁₀ alkyl group; and
R³ is chloro, bromo or a heterocyclic group selected from 1-pyrazolyl, 1-benzopyrazolyl, 1-imidazolyl, 1-benzoimidazolyl, 2,3-triazol-1-yl, 2,4-triazol-1-yl, 1,6-dihydropyridazin-1-yl, 1,2-dihydropyrimidin-1-yl, 1,2-dihydro-1,3-benzodiazin-1-yl, 1,2-dihydropyrazin-1-yl, 1,2-dihydro-1,4-benzodiazin-1-yl, 1,2-dihydro-1,3,5-triazin-1-yl and 3,4-dihydro-1,2,4-triazinyl, provided that within the copolymer at least one R³ is a heterocyclic group;
p is in the range of 100 to 100.000; and
q is in the range of 100 to 100.000.

2. Proton conducting copolymer according to Claim 1, wherein the copolymer is a block copolymer.

3. Proton conducting copolymer according to Claim 1 or Claim 2, wherein the copolymer comprises 2,6-di(p-R¹-aryl)phenol moieties.

4. Proton conducting copolymer according to any one of Claims 1-3, wherein the copolymer comprises 2,6-di-R²-phenol moieties.

5. Proton conducting copolymer according to any one of Claims 1-4, wherein R² is methyl.

6. Proton conducting copolymer according to any one of Claims 1-5, wherein R¹ is hydrogen.

7. Proton conducting copolymer according to any one of Claims 1 - 6, wherein R³ is chloro, bromo, 1-imidazolyl or 1-benzoimidazolyl.

8. Proton conducting copolymer according to any one of Claims 1 - 7, wherein the copolymer has a number average molecular weight in the range of 1000 to 1.000.000.

9. Proton conducting copolymer according to any one of Claims 1 - 8, wherein the ratio of p and q is between 2:1 to 1:2.

10. Proton conducting copolymer according to any one of Claims 1 - 9, wherein at least 40% of the R³ groups is a heterocyclic group.

11. Process for the preparation of a proton conducting copolymer according to formula (I): 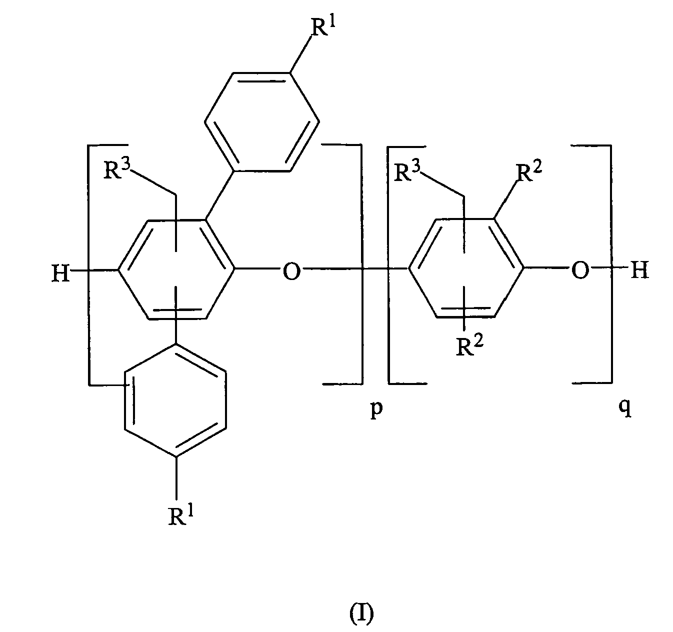 wherein:
the proton conducting copolymer comprises 2,5- and/or 2,6-di(p-R¹-aryl)phenol moieties and 2,5- and/or 2,6-di-R²-phenol moieties;
R¹, R², R³, p and q are defined as in Claim 1;
wherein the process comprises the following steps:
(a) simultaneous or subsequent polymerisation of a 2,5- and/or 2,6-di(p-R¹-aryl)phenol derivative and a 2,5- and/or 2,6-di-R²-phenol derivative under oxidative coupling polymerisation conditions;
(b) subjecting the copolymer as obtained in step (a) to halomethylation conditions to obtain a halomethylated copolymer; and
(c) reacting the halomethylated copolymer with a heterocyclic compound, wherein the heterocyclic compound is selected from the group consisting of pyrazole, benzopyrazole, imidazole, benzoimidazole, 1,2,3-triazole, 1,2,4-triazole, 1,6-dihydropyridazine, 1,2-dihydropyrimidine, 1,2-dihydro-1,3-benzodiazine, 1,2-dihydropyrazine, 1,2-dihydro-1,4-benzodiazine, 1,2-dihydro-1,3,5-triazine and 3,4-dihydro-1,2,4-triazine.

12. Process according to Claim 11, wherein the proton conducting copolymer is a block copolymer and comprises 2,5- and/or 2,6-di(p-R¹-aryl)phenol moieties and 2,5- and/or 2,6-di-R²-phenol moieties;
R¹, R², R³, p and q are defined as in Claim 1; and
wherein the process comprises the following steps:
(i) polymerising a 2,5- and/or 2,6-di(p-R¹-aryl)phenol derivative under oxidative coupling polymerisation conditions;
(ii) polymerising a 2,5- and/or 2,6-di-R²-phenol derivative under oxidative coupling polymerisation conditions to obtain a block copolymer comprising a first block comprising 2,5- and/or 2,6-di(p-R¹-aryl)phenol moieties and a second block comprising 2,5- and/or 2,6-di-R²-phenol moieties;
(iii) subjecting the block copolymer as obtained in step (b) to halomethylation conditions to obtain a halomethylated block copolymer; and
(iv) reacting the halomethylated block copolymer with a heterocyclic compound, wherein the heterocyclic compound is selected from the group consisting of pyrazole, benzopyrazole, imidazole, benzoimidazole, 1,2,3-triazole, 1,2,4-triazole, 1,6-dihydropyridazine, 1,2-dihydropyrimidine, 1,2-dihydro-1,3-benzodiazine, 1,2-dihydropyrazine, 1,2-dihydro-1,4-benzodiazine, 1,2-dihydro-1,3,5-triazine and 3,4-dihydro-1,2,4-triazine.

13. Process according to Claim 11 or Claim 12, wherein steps (a), (i) and (ii) of the process are conducted at a temperature in the range of 40° to 100°C.

14. Process according to any one of Claims 11 - 13, wherein steps (b) and (iii) are conducted at a temperature in the range of 25°C to 75°C.

15. Process according to any one of Claims 11 - 14, wherein steps (c) and (iv) are conducted at a temperature in the range of -20° to 20°C.

16. Proton conducting copolymer obtainable by the process according to any one of Claims 11-15.

17. Membrane comprising the proton conducting copolymer according to any one of Claims 1-10 or 16.

18. Membrane according to Claim 17, wherein the membrane is a reinforced membrane comprising the proton conducting copolymer according to any one of Claims 1-10 or 16 as proton conducting phase.

19. Fuel cell comprising the membrane according to Claim 17 or Claim 18.

20. Fuel cell electrode comprising the proton conducting copolymer according to any one of Claims 1 - 10 or 16.

21. Copolymer according to formula (II): 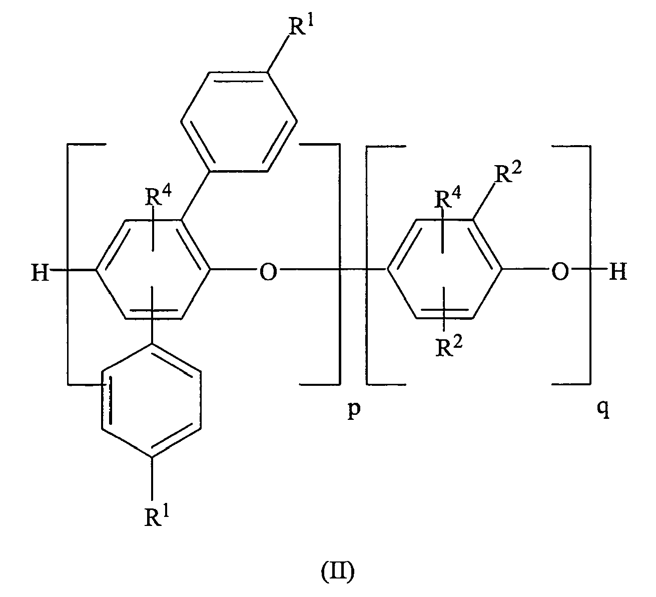 wherein
R¹ is hydrogen or a C₁ - C₁₀ alkyl group;
R² is a C₁- C₁₀ alkyl group;
R⁴ is hydrogen or a -CH₂X group wherein X is chloro or bromo, provided that within the copolymer at least one R⁴ is a -CH₂X group;
p is in the range of 100 to 100.000; and
q is in the range of 100 to 100.000.

22. Copolymer according to Claim 21, wherein the copolymer is a block copolymer.

23. Copolymer according to Claim 21 of Claim 22, wherein the copolymer has a number average molecular weight of 1000 to 1.000.000.

24. Copolymer according to any one of Claims 21 - 23, wherein the ratio of p and q is between 2:1 and 1:2.

25. Copolymer according to any one of Claims 21 - 24, wherein R¹ is hydrogen, R² is methyl and X is chloro.

## Patentansprüche

1. Protonenleitendes Copolymer gemäß Formel (I): 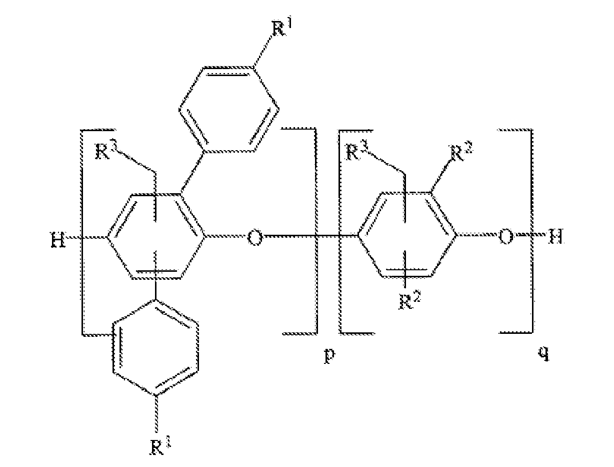 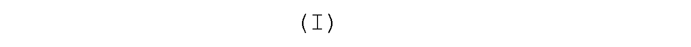 wobei:
das Copolymer 2,5- und/oder 2,6-Di(p-R¹-aryl)phenol-Gruppierungen und 2,5- und/oder 2,6-DiR²-phenol- Gruppierungen umfaßt;
R¹ Wasserstoff oder eine C₁- bis C₁₀-Alkylgruppe ist;
R² eine C₁- bis C₁₀-Alkylgruppe ist; und
R³ Chlor, Brom oder eine heterocyclische Gruppe ist, ausgewählt aus 1-Pyrazolyl, 1-Benzopyrazolyl, 1-Imidazolyl, 1-Benzoimidazolyl, 2,3-Triazol-1-yl, 2,4-Triazol-1-yl, 1,6- Dihydropyridazin -1-yl, 1,2-Dihydropyrimidin-1-yl, 1,2-Dihydro-1,3-benzodiazin-1-yl, 1,2-Dihydropyrazin-1-yl, 1,2-Dihydro-1,4-benzodiazin-1-yl, 1,2-Dihydro-1,3,5-triazin-1-yl und 3,4-Dihydro-1,2,4-triazinyl, mit der Maßgabe, daß innerhalb des Copolymers mindestens ein R³ eine heterocyclische Gruppe ist;
p in dem Bereich von 100 bis 100.000 liegt; und
q in dem Bereich von 100 bis 100.000 liegt.

2. Protonenleitendes Copolymer nach Anspruch 1, wobei das Copolymer ein Blockcopolymer ist.

3. Protonenleitendes Copolymer nach Anspruch 1 oder 2, wobei das Copolymer 2,6-Di(p-R¹-aryl)phenol-Gruppierungen umfaßt.

4. Protonenleitendes Copolymer nach einem von Anspruch 1 bis 3, wobei das Copolymer 2,6-Di-R²-phenol-Gruppierungen umfaßt.

5. Protonenleitendes Copolymer nach einem von Anspruch 1 bis 4, wobei R² Methyl ist.

6. Protonenleitendes Copolymer nach einem von Anspruch 1 bis 5, wobei R¹ Wasserstoff ist.

7. Protonenleitendes Copolymer nach einem von Anspruch 1 bis 6, wobei R³ Chlor, Brom, 1-Imidazolyl oder 1-Benzoimidazolyl ist.

8. Protonenleitendes Copolymer nach einem von Anspruch 1 bis 7, wobei das Copolymer ein Zahlenmittel des Molekulargewichtes in dem Bereich von 1.000 bis 1.000.000 aufweist.

9. Protonenleitendes Copolymer nach einem von Anspruch 1 bis 8, wobei das Verhältnis von p und q zwischen 2 : 1 und 1 : 2 beträgt.

10. Protonenleitendes Copolymer nach einem von Anspruch 1 bis 9, wobei mindestens 40 % der R³-Gruppen eine heterocyclische Gruppe sind.

11. Verfahren zum Herstellen eines protonenleitenden
Copolymers gemäß Formel (I): 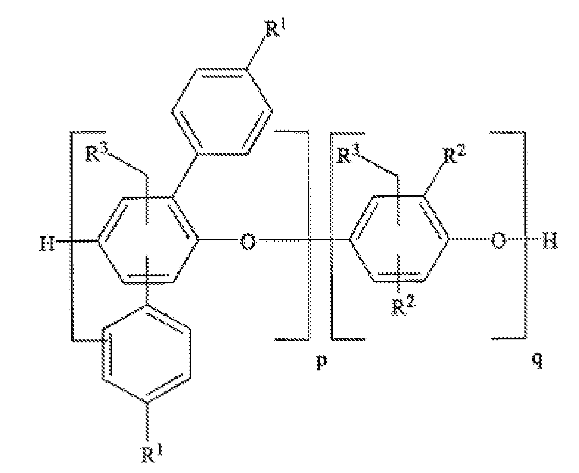 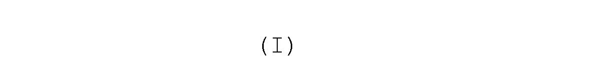 wobei:
das protonenleitende Copolymer 2,5- und/oder 2,6-Di(p-R¹-aryl)phenol-Gruppierungen und 2,5- und/oder
2,6-Di-R²-phenol-Gruppierungen umfaßt;
R¹, R², R³, p und q wie in Anspruch 1 definiert sind;
wobei das Verfahren die folgenden Schritte umfaßt:
(a) gleichzeitige oder nachfolgende Polymerisation eines 2,5- und/oder 2,6-Di(p-R¹-aryl)phenol-Derivats und eines 2,5- und/oder 2,6-Di-R²-phenol-Derivats unter Bedingungen der oxidativen Kopplungspolymerisation;
(b) Unterwerfen des Copolymers, wie in Schritt (a) erhalten, Halogenmethylierungsbedingungen, um ein halogenmethyliertes Copolymer zu erhalten; und
(c) Zur-Reaktion-Bringen des halogenmethylierten Copolymers mit einer heterocyclischen Verbindung, wobei die heterocyclische Verbindung aus der Gruppe ausgewählt ist, die aus Pyrazol, Benzopyrazol, Imidazol, Benzoimidazol, 1,2,3-Triazol, 1,2,4-Triazol, 1,6-Dihydropyridazin, 1,2-Dihydropyrimidin, 1,2-Dihydro-1,3-benzodiazin, 1,2-Dihydropyrazin, 1,2-Dihydro-1,4-benzodiazin, 1,2-Dihydro-1,3,5-Triazin und 3,4-Dihydro-1,2,4-triazin besteht.

12. Verfahren nach Anspruch 11, wobei das protonenleitende Copolymer ein Blockcopolymer ist und 2,5- und/oder 2,6-Di(p-R¹-aryl)phenol-Gruppierungen und 2,5- und/oder 2,6-Di-R²-phenol-Gruppierungen umfaßt;
R¹, R², R³, p und q wie in Anspruch 1 definiert sind; und
wobei das Verfahren die folgenden Schritte umfaßt:
(i) Polymerisieren eines 2,5- und/oder 2,6-Di(p-R¹-aryl)phenol-Derivats unter Bedingungen der oxidativen Kopplungspolymerisation;
(ii) Polymerisieren eines 2,5- und/oder 2,6-Di-R²-phenol-Derivats unter Bedingungen der oxidativen Kopplungspolymerisation, um ein Blockcopolymer, umfassend einen ersten Block, umfassend 2,5- und/oder 2,6-Di(p-R¹-aryl)phenol-Gruppierungen, und einen zweiten Block, umfassend 2,5- und/oder 2,6-Di-R²-phenol-Gruppierungen, zu erhalten;
(iii) Unterwerfen des Blockcopolymers, wie in Schritt (b) erhalten, Halogenmethylierungsbedingungen, um ein halogenmethyliertes Blockcopolymer zu erhalten; und
(iv) Zur-Reaktion-Bringen des halogenmethylierten Blockcopolymers mit einer heterocyclischen Verbindung, wobei die heterocyclische Verbindung aus der Gruppe ausgewählt ist, die aus Pyrazol, Benzopyrazol, Imidazol, Benzoimidazol, 1,2,3-Triazol, 1,2,4-Triazol, 1,6-Dihydropyridazin, 1,2-Dihydropyrimidin, 1,2-Dihydro-1,3-benzodiazin, 1,2-Dihydropyrazin, 1,2-Dihydro-1,4-benzodiazin, 1,2-Dihydro-1,3,5-Triazin und 3,4-Dihydro-1,2,4-triazin besteht.

13. Verfahren nach Anspruch 11 oder 12, wobei Schritt (a), (i) und (ii) des Verfahrens bei einer Temperatur in dem Bereich von 40 °C bis 100 °C ausgeführt werden.

14. Verfahren nach einem von Anspruch 11 bis 13, wobei Schritt (b) und (iii) bei einer Temperatur in dem Bereich von 25 °C bis 75 °C ausgeführt werden.

15. Verfahren nach einem von Anspruch 11 bis 14, wobei Schritt (c) und (iv) bei einer Temperatur in dem Bereich von -20 °C bis 20 °C ausgeführt werden.

16. Protonenleitendes Copolymer, erhältlich durch das Verfahren nach einem von Anspruch 11 bis 15.

17. Membran, umfassend das protonenleitende Copolymer nach einem von Anspruch 1 bis 10 oder 16.

18. Membran nach Anspruch 17, wobei die Membran eine verstärkte Membran, umfassend das protonenleitende Copolymer nach einem von Anspruch 1 bis 10 oder 16 als protonenleitende Phase, ist.

19. Brennstoffzelle, umfassend die Membran nach Anspruch 17 oder 18.

20. Brennstoffzellenelektrode, umfassend das protonenleitende Copolymer nach einem von Anspruch 1 bis 10 oder 16.

21. Copolymer gemäß Formel (II): 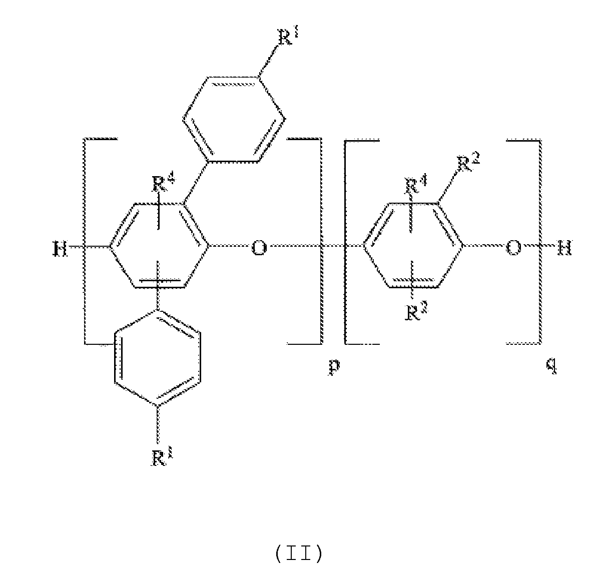 wobei
R¹ Wasserstoff oder eine C₁- bis C₁₀-Alkylgruppe ist;
R² eine C₁- bis C₁₀-Alkylgruppe ist;
R⁴ Wasserstoff oder eine -CH₂X-Gruppe ist, wobei X Chlor oder Brom ist, mit der Maßgabe, daß innerhalb des Copolymers mindestens ein R⁴ eine -CH₂X-Gruppe ist;
p in dem Bereich von 100 bis 100.000 liegt; und
q in dem Bereich von 100 bis 100.000 liegt.

22. Copolymer nach Anspruch 21, wobei das Copolymer ein Blockcopolymer ist.

23. Copolymer nach Anspruch 21 oder 22, wobei das Copolymer ein Zahlenmittel des Molekulargewichtes von 1.000 bis 1.000.000 aufweist.

24. Copolymer nach einem von Anspruch 21 bis 23, wobei das Verhältnis von p und q zwischen 2 : 1 und 1 : 2 beträgt.

25. Copolymer nach einem von Anspruch 21 bis 24, wobei R¹ Wasserstoff ist, R² Methyl ist und X Chlor ist.

## Revendications

1. Copolymère conduisant les protons selon la formule (I) : 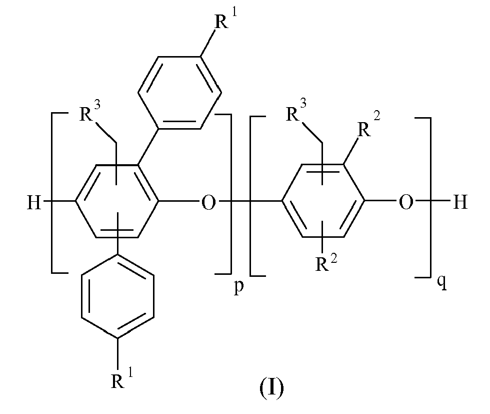 dans laquelle :
le copolymère comprend des groupes 2,5- et/ou 2,6-di(p-R¹-aryl)phénol et des groupes 2,5- et/ou 2,6-di-R²-phénol;
R¹ est un hydrogène ou un groupe alkyle C₁-C₁₀;
R² est un groupe alkyle C₁-C₁₀; et,
R³ est un chlore, un brome ou un groupe hétérocyclique choisi parmi le 1-pyrazolyle, le 1-benzopyrazolyle, le 1-imidazolyle, le 1-benzoimidazolyle, le 2,3-triazol-1-yle, le 2,4-triazol-1-yle, le 1,6-dihydropyridazin-1-yle, le 1,2-dihydropyrimidin-1-yle, le 1,2-dihydro-1,3-benzodiazin-1-yle, le 1,2-dihydropyrazin-1-yle, le 1,2-dihydro-1,4-benzodiazin-1-yle, le 1,2-dihydro-1,3,5-triazin-1-yle et le 3,4-dihydro-1,2,4-triazinyle, sous réserve que dans le copolymère, au moins un groupe R³ soit un groupe hétérocyclique;
p est dans la gamme de 100 à 100 000; et,
q est dans la gamme de 100 à 100 000.

2. Copolymère conduisant les protons selon la revendication 1, dans lequel le copolymère est un copolymère séquencé.

3. Copolymère conduisant les protons selon la revendication 1 ou la revendication 2, dans lequel le copolymère comprend des groupes 2,6(p-R¹-aryl)phénol.

4. Copolymère conduisant les protons selon l'une quelconque des revendications 1 à 3, dans lequel le copolymère comprend des groupes 2,6-di-R²-phénol.

5. Copolymère conduisant les protons selon l'une quelconque des revendications 1 à 4, dans lequel R² est un méthyle.

6. Copolymère conduisant les protons selon l'une quelconque des revendications 1 à 5, dans lequel R¹ est un hydrogène.

7. Copolymère conduisant les protons selon l'une quelconque des revendications 1 à 6, dans lequel R³ est un chlore, un brome, un 1-imidazolyle ou un 1-benzoimidazolyle.

8. Copolymère conduisant les protons selon l'une quelconque des revendications 1 à 7, dans lequel le copolymère a une masse moléculaire moyenne dans la gamme de 1000 à 1 000 000.

9. Copolymère conduisant les protons selon l'une quelconque des revendications 1 à 8, dans lequel le rapport de p sur q est entre 2/1 et 1/2.

10. Copolymère conduisant les protons selon l'une quelconque des revendications 1 à 9, dans lequel au moins 40% des groupes R³ sont des groupes hétérocycliques.

11. Procédé de préparation d'un copolymère conduisant les protons selon la formule (I) : 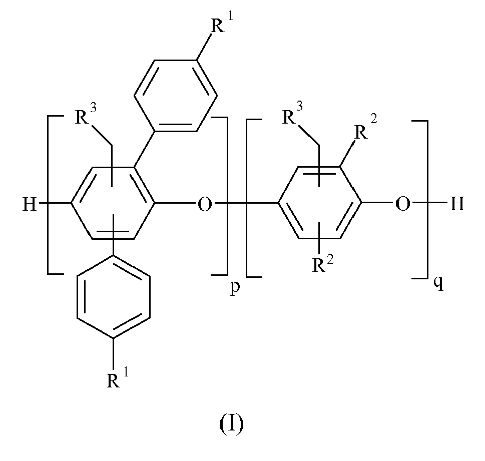 dans laquelle :
le copolymère conduisant les protons comprend des groupes 2,5- et/ou 2,6-di(p-R¹-aryl)phénol et des groupes 2,5- et/ou 2,6-di-R²-phénol;
R¹, R², R³, p et q sont tels que définis dans la revendication 1;
dans lequel le procédé comprend les étapes suivantes :
(a) réaliser une polymérisation simultanée ou successive d'un dérivé 2,5- et/ou 2,6-di(p-R¹-aryl)phénol et d'un dérivé 2,5- et/ou 2,6-di-R²-phénol dans des conditions de polymérisation par couplage oxydant;
(b) soumettre le copolymère tel qu'obtenu à l'étape (a) à des conditions d'halométhylation pour obtenir un copolymère halométhylé; et,
(c) faire réagir le copolymère halométhylé avec un composé hétérocyclique, dans lequel le composé hétérocyclique est choisi dans le groupe constitué des pyrazole, benzopyrazole, imidazole, benzoimidazole, 1,2,3-triazole, 1,2,4-triazole, 1,6-dihydropyridazine, 1,2-dihydropyrimidine, 1,2-dihydro-1,3-benzodiazine, 1,2-dihydropyrazine, 1,2-dihydro-1,4-benzodiazine, 1,2-dihydro-1,3,5-triazine et 3,4-dihydro-1,2,4-triazine.

12. Procédé selon la revendication 11, dans lequel le copolymère conduisant les protons est un copolymère séquencé et comprend des groupes 2,5- et/ou 2,6-di(p-R¹-aryl)phénol et des groupes 2,5- et/ou 2,6-di-R²-phénol;
R¹, R², R³, p et q sont tels que définis dans la revendication 1; et,
dans lequel le procédé comprend les étapes suivantes :
(i) réaliser une polymérisation d'un dérivé 2,5- et/ou 2,6-di(p-R¹-aryl)phénol dans des conditions de polymérisation par couplage oxydant;
(ii) réaliser une polymérisation d'un dérivé 2,5- et/ou 2,6-di-R²-phénol dans des conditions de polymérisation par couplage oxydant pour obtenir un copolymère séquencé comprenant un premier bloc comprenant des groupes 2,5- et/ou 2,6-di(p-R¹-aryl)phénol et un deuxième bloc comprenant des groupes 2,5- et/ou 2,6-di-R²-phénol;
(iii) soumettre le copolymère tel qu'obtenu à l'étape (b) à des conditions de halométhylation pour obtenir un copolymère halométhylé; et,
(iv) faire réagir le copolymère séquencé halométhylé avec un composé hétérocyclique, dans lequel le composé hétérocyclique est choisi dans le groupe constitué des pyrazole, benzopyrazole, imidazole, benzoimidazole, 1,2,3-triazole, 1,2,4-triazole, 1,6-dihydropyridazine, 1,2-dihydropyrimidine, 1,2-dihydro-1,3-benzodiazine, 1,2-dihydropyrazine, 1,2-dihydro-1,4-benzodiazine, 1,2-dihydro-1,3,5-triazine et 3,4-dihydro-1,2,4-triazine.

13. Procédé selon la revendication 11 ou la revendication 12, dans lequel les étapes (a), (i) et (ii) du procédé sont effectuées à une température dans la gamme de 40°C à 100°C.

14. Procédé selon l'une quelconque des revendications 11 à 13, dans lequel les étapes (b) et (iii) sont effectuées à des températures dans la gamme de 25°C à 75°C.

15. Procédé selon l'une quelconque des revendications 11 à 14, dans lequel les étapes (c) et (iv) sont effectuées à des températures dans la gamme de -20°C à 20°C.

16. Copolymère conduisant les protons tel qu'obtenu par le procédé selon l'une quelconque des revendications 11 à 15.

17. Membrane comprenant le copolymère conduisant les protons selon l'une quelconque des revendications 1 à 10 ou 16.

18. Membrane selon la revendication 17, dans laquelle la membrane est une membrane renforcée comprenant le copolymère conduisant les protons selon l'une quelconque des revendications 1 à 10 ou 16 comme phase conduisant les protons.

19. Pile à combustible comprenant la membrane selon la revendication 17 ou la revendication 18.

20. Pile à combustible comprenant le copolymère conduisant les protons selon l'une quelconque des revendications 1 à 10 ou 16.

21. Copolymère selon la formule (II) : 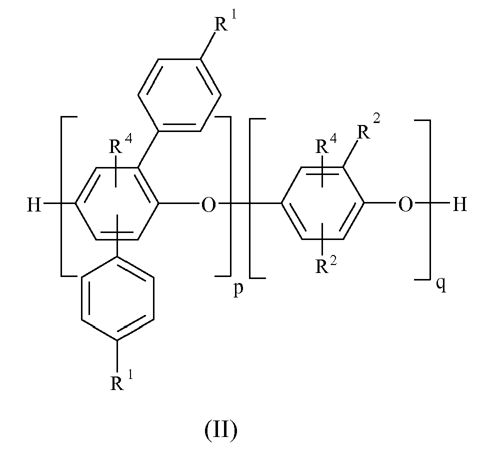 dans lequel :
R¹ est un hydrogène ou un groupe alkyle C₁-C₁₀;
R² est un groupe alkyle C₁-C₁₀; et,
R⁴ est un hydrogène ou un groupe -CH₂X dans lequel X est un chlore ou un brome, sous réserve que, dans le copolymère, au moins un groupe R⁴ soit un groupe -CH₂X;
p est dans la gamme de 100 à 100 000; et,
q est dans la gamme de 100 à 100 000.

22. Copolymère selon la revendication 21, dans lequel le copolymère est un copolymère séquencé.

23. Copolymère selon la revendication 21 ou la revendication 22, dans lequel le copolymère a une masse moléculaire moyenne de 1000 à 1 000 000.

24. Copolymère selon l'une quelconque des revendications 21 à 23, dans lequel le rapport de p sur q est entre 2/1 et 1/2.

25. Copolymère selon l'une quelconque des revendications 21 à 24, dans lequel R¹ est un hydrogène, R² est un méthyle et X est un chlore.
